# EUROPEAN PATENT APPLICATION

(11) **EP 1 770 016 A1**
(43) Date of publication of application: **04.04.2007**
(21) Application number: 06121373.2
(22) Date of filing: 27.09.2006
(51) Int. Cl.: B65B 43/14, B65B 43/20, B65G 59/06, B65H 3/32

(54) **Method and apparatus for withdrawing flat folded piled up articles from the open bottom of a magazine**

(30) Priority: 28.09.2005 IT BO20050582
(71) Applicant: MARCHESINI GROUP S.p.A., 40065 Pianoro (Bologna) (IT)
(72) Inventor: Monti, Giiuseppe, 40065, Pianoro (Bologna) (IT)
(74) Representative: Dall'Olio, Giancarlo

(57) **Abstract**

The apparatus (1) for withdrawing of flat folded, piled up articles from the open bottom (3a) of a magazine (3) includes support means (4), which hold the flat folded, piled up articles in the magazine (3), together with first movable hold up means (5). Sensor means (8) detect the contact surfaces (W) between the lowermost article (2*) of the pile (2) and the above article (20*) so as to place them in alignment with second movable hold up means (6), operated to insert between the contact surfaces (W) and hold the above article (20*) while the first hold up means are moved to a release position for releasing the lowermost article (2*) on a conveying belt (9).

According to the claimed method, the first and second hold up means are alternately operated to hold the pile of articles while the lowermost article is released.

## Description

The present invention relates to withdrawing flat folded, piled up articles, such as flat folded tubular blanks, from the open bottom of a magazine.

There are apparatuses in the art including at least one rotating arm, provided with gripping means, e.g. suction cups connected to a source of vacuum, which withdraw flat folded articles, one by one, from the open bottom of an associated magazine.

The articles set in a pile within the magazine, where they are held by flexible plates, placed on both edges of the bottom. During the withdrawing operation, the plates bend, and allow one article at a time to be withdrawn from the pile bottom.

However, a disadvantage reduces the reliability of similar apparatuses: actually, the singular release of the articles during the withdrawing step is not assured, which leads to all possible negative implications (interruption of the production cycle, skilled operator assistance, reduction of the production rate, etc.).

For example, in some types of boxing machines the flat folded tubular blanks are released from a magazine and then erected (the so-called " "rhombus-opening"" operation).

A multiple release of the blanks, as it is obvious, causes jamming of the machine, and in the most serious cases, even the damages to some work means.

The object of the present invention is to propose a method for withdrawing flat folded, piled up articles from the open bottom of a magazine, which assures the release of a prefixed number of articles, in particular each time of one single article, from the magazine.

Another object of the present invention is to propose a method for withdrawing flat folded articles, characterized by extremely simple and intuitive work steps, which allows high production rate standards and flexibility in any working conditions, independently from the size and type of the articles, and from the material, of which they are made.

Another object of the present invention is to propose an apparatus for withdrawing piled up articles from the open bottom of a magazine, which carries out the above mentioned method, ensuring the release of a prefixed number of articles, in particular the release each time of one single article, from the magazine.

A further object of the present invention is to propose an apparatus, which is functional, versatile in any work conditions and which allows a rapid and easy adapting to the article size and/or type change.

The above mentioned objects are obtained in accordance with the contents of the claims, while advantageous and convenient embodiments of the invention are disclosed in the dependent claims..

The characteristic features of the invention are pointed out in the following description of some preferred but not only embodiments, with reference to the enclosed figures, in which:
- Figure 1 is a schematic, lateral view of the apparatus, which carries out the proposed method, according to a first embodiment;
- Figure 2 is a schematic, section view, taken along II-II indicated in Figure 1;
- Figures 3, 4 are as many schematic, enlarged, lateral views of a detail of the apparatus of Figure 1, in subsequent work steps;
- Figures 5, 6 are as many schematic, lateral views of the apparatus of Figure 1, in subsequent work steps;
- Figures 7, 8 are as many schematic, lateral views of a particular of the apparatus in subsequent work steps, according to another embodiment.

The apparatus and the method, carried out thereby, for withdrawing flat folded articles from the open bottom of a magazine, both proposed by the present invention, will be described hereinbelow, with an explicit reference to the enclosed Figures.

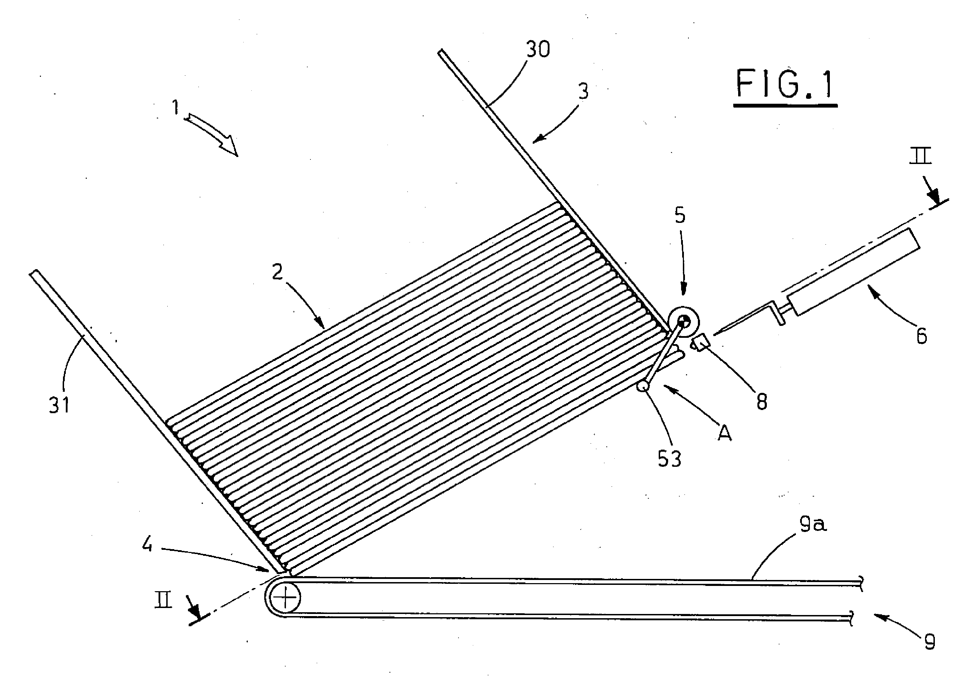

The reference numeral 1 indicates the apparatus as a whole, including a magazine 3, containing flat folded, piled up articles, in particular flat folded tubular blanks, aimed at being withdrawn one by one from the open bottom 3a (Figures 1, 5, 6) of the magazine 3, and at being released, e.g. on conveying means 9, situated therebelow, such as an endless conveyor belt .

First movable hold up means 5 and support means 4 are situated at the open bottom 3a of the magazine 3, respectively below a first wall 30 and a second wall 31 of the magazine 3, and are aimed at holding the lowermost article 2* of the pile 2.

Considering the bottom of the magazine, in particular an ideal line joining the rest points for the lower most blank 2* on the hold up means 5 and the support means 4, the first wall 30 and the second wall 31 are inclined towards the side corresponding to the support means 4, by an angle of less than 90°, rather than perpendicular to this line.

In this way, the blanks 2 are slightly shifted sideways, so that part of their weight is supported by the second wall 31 and the movable hold up means 5 get less weight to support. This is an advantageous feature as it will be apparent in the following.

Other lateral walls 32, 33 complete the magazine 3 according to usual design configuration.

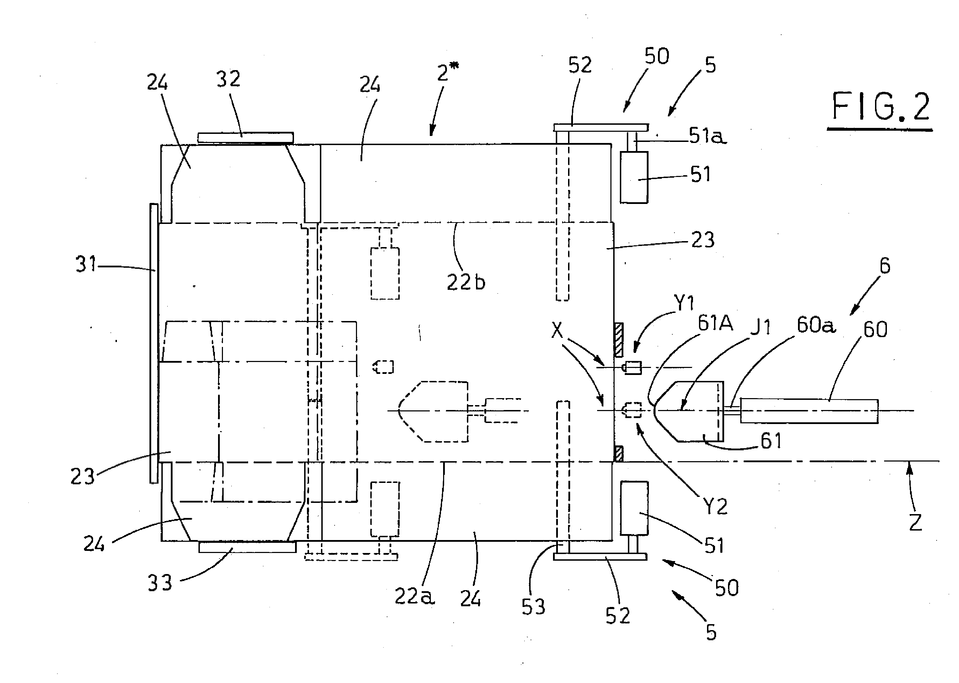

In the shown example (Figure 2), each flat folded tubular blank has lateral wall defining pre-creasing lines and a first 22a and a second 22b closing flap pre-creasing lines, aimed at facilitating the blank to be folded in a box and then closed by closing upper and lower flaps.

In a first embodiment, the support means 4 are formed by the upper active run 9a of the conveyor belt 9 set close to the lower end of the second wall 31. The belt 9 is normally disabled and is operated in a forward direction AV only when a blank is released thereon. The operation of the belt necessary to transfer the blank implies a creeping of the lowermost article 2* on the upper active run 9a for a short time.

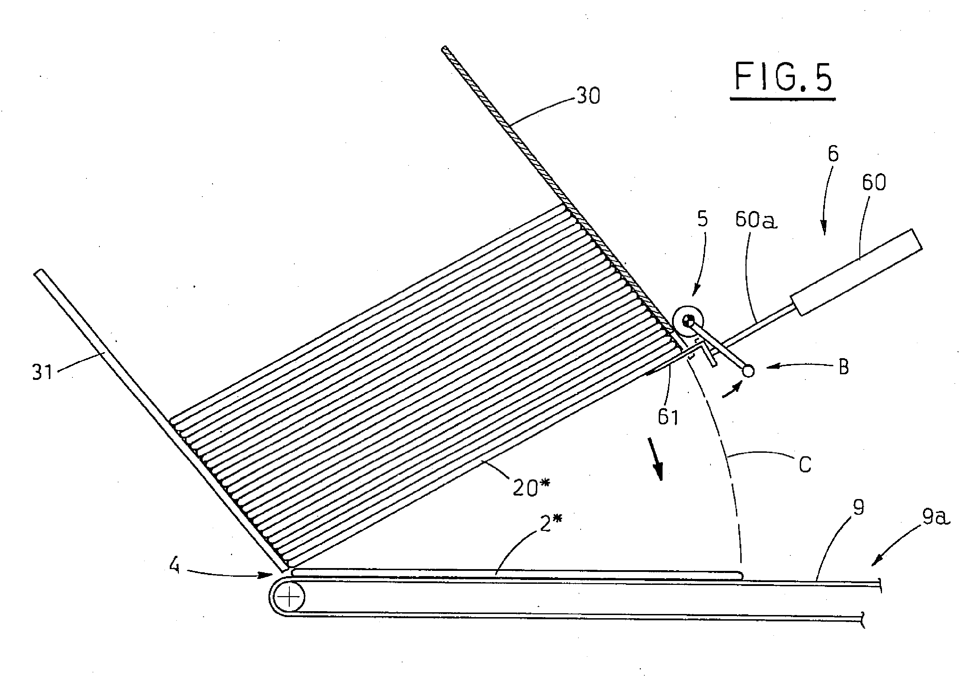

The first movable hold up means 5 include a pair of support elements 50 (see Figure 2), situated near the opposite lateral walls 32, 33 of the magazine at both sides of the first wall 30 of the magazine 3, which are operated into rotation by first actuator means 51 between a position A, in which the lowermost article 2* is held up (Figure 1) and a position B, in which the article 2* is released (Figure 5).

The shaft 51a of each actuator 51 rotates a first arm 52 and a second arm 53, joined orthogonally to each other to form each support element 50.

In particular, the first arm 52 is fastened, with one end, to the rotation shaft 51a, and extends sideways to the magazine 3 while the other end of the first arm carries rotatably the second arm 53, which extends orthogonal thereto, to hold the lowermost article 2* up.

Second movable hold up means 6 are situated beside the magazine 3, between the first movable hold up means 5. The second movable hold up means 6 include a plate 61, carried by a stem 60a and moved by second actuator means 60 along a translation plane J. The translation plane J extends parallel to the flat folded blanks and is, in particular, situated between the lowermost article 2* of the pile 2 and an article 20* situated just thereover. The translation plane J should theoretically extend along the contact surfaces W of the lowermost blank 2* and the blank 20 immediately thereover.

The plate 61 has a pointed portion 61A, preferably symmetrical with respect to a vertical plane perpendicular to the plane J, and is situated in a position corresponding to an opening made in the first wall 30 leaving free access to the bottom of the pile of blanks.

Optical sensor means 8 are situated near the open bottom 3a of the magazine 3, likewise on the side of the first and second movable hold up means 5, 6, and beside the plate 61 (position Y1). The sensor means 8 are turned in a direction X, coplanar with the translation plane J of the plate 61. and are aimed at detecting a portion of the contact surfaces W between the lowermost blank 2* and the blank 20 thereover also through the opening made in the first wall 30.

The apparatus 1 for withdrawing piled up articles from the open bottom 3a of the magazine 3 performs systematic and repetitive operations, therefore a generic cycle will be described in the following.

The lowermost article, or flat folded blank 2* (Figure 1) is initially held by the support means 4 and the first movable hold up means 5, which are set in the holding position A, with the second arm 53 of each element 50 cooperating in the support of the article 2*.

The first movable hold up means 5, although remaining in the holding position A, are operated to slightly lower/raise the pile 2 of flat folded articles (direction H, K), until the sensor means 8 detects the contact surfaces W. This action is made easier because part of the weight of the piled blanks id supported by the second wall 31 and the load on the first hold up means 5 is lower.

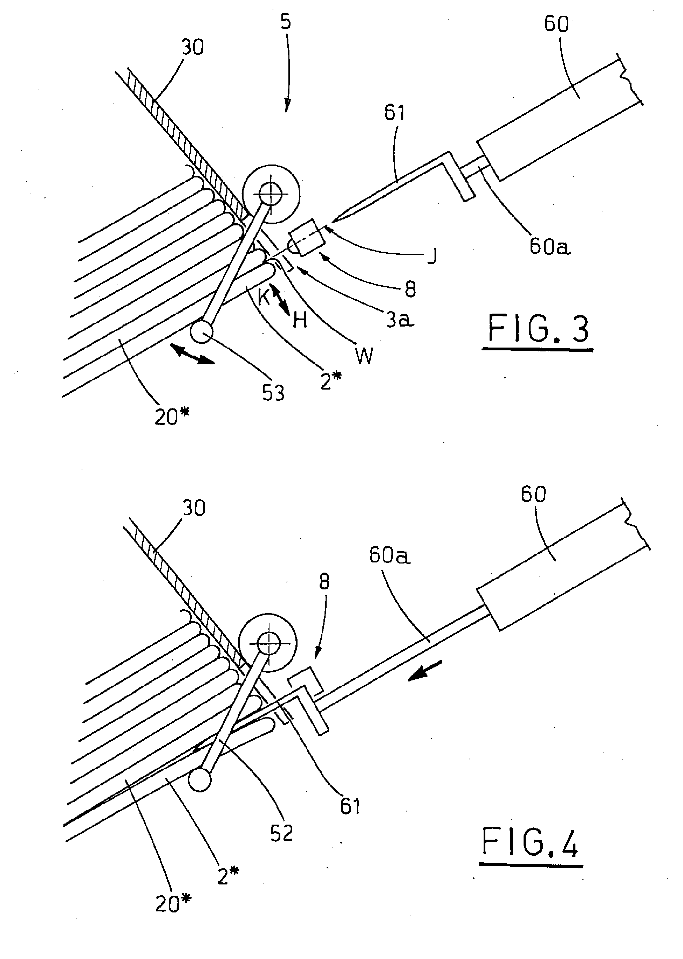

Afterwards, the plate 61 is moved by the second actuator means 60, to be introduced partially between the lowermost article 2* and the above article 20* (Figure 4).

At this point (Figure 5), the first movable hold up means 5 are brought to the position B, which causes the release of the lowermost article 2* onto the upper active run 9a of the conveying belt 9, along a trajectory defined by a circumference arc C.

The above article 20* of the pile 2, now lowermost, is held by the support means 4 and the plate 61.

During the release step, in which the support elements 50 pass from the position A to the other position B, the second arm 53 rotates on its axis, due to the rolling effect, established between the latter and the lower surface of the lowermost article 2*.

This makes the transitory step extremely safe and reliable, avoiding any possible jamming.

At this point, the conveyor belt 9 is operated and the blank just released is taken away to a further work station.

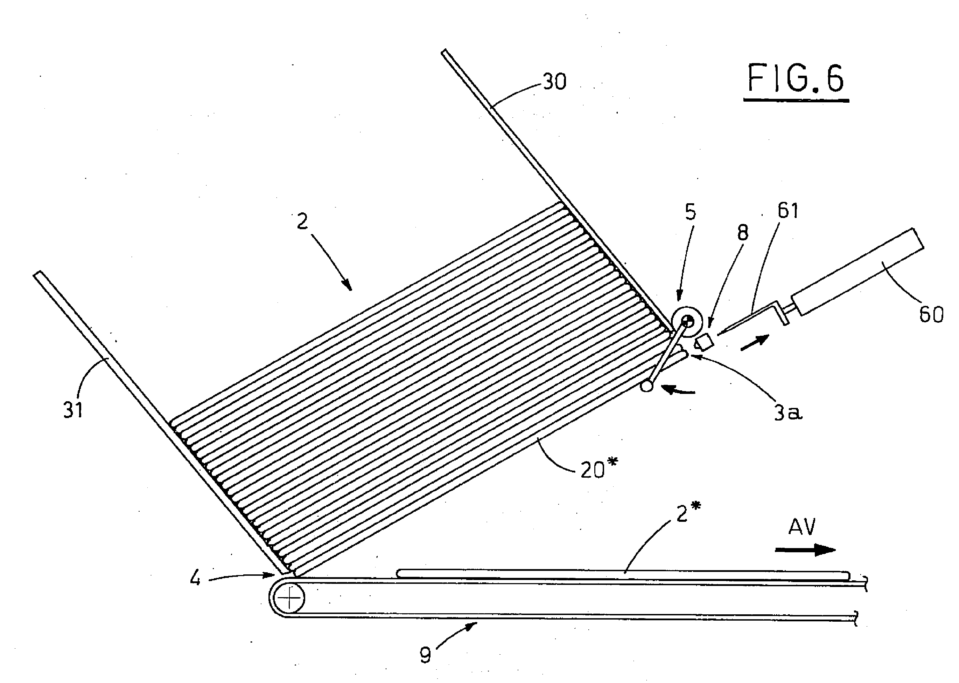

Then, the first movable hold up means 5 are operated to move from the release position B, back to the holding position A, and the plate 61 is removed from the above article 20*, now lowermost and held by the support means 4 and the first movable hold up means 5 (Figure 6).

In case of the blank size change, the second wall 31 of the magazine 3 is kept fixed while the first wall 30 is moved close to/far from the second wall 31, obviously in relation to the dimensions of the new articles.

The distance between the lateral walls 32, 33 is adjusted in such a way, as to maintain the first transversal pre-creasing line 22a of the lowermost article 2* aligned with a second stationary reference plane Z.

The sensor means 8 and the first and second movable hold up means 5, 6 are made translate along with the first wall 30 and all these elements maintain therefore their reciprocal position unchanged.

For this purpose, a moving frame (not shown) can be provided, to carry the sensor means 8 and the first and second movable hold up means 5, 6, which occupy selected positions for the optimal arrangement of the latter with respect to the second wall 31.

As a matter of fact, the first wall 30 could be kept stationary or even absent. The blanks are in fact set to rest on the support means, the movable hold up means and, with their edges, on the second wall 30. In this last case (not shown in the figures), stops are necessary to keep still the blanks while the conveying belt 9 is operated, the stops being for instance joined to either the first or the second hold up means.

Therefore, the lowermost article 2*, independently from its dimensions, is in the same position with respect to the second stationary reference plane Z, thus also after its release onto the conveying belt 9, along a circumference arc C trajectory, the alignment between the first transversal pre-creasing line 22a with the plane Z remains unchanged.

This can be extremely important, if the devices situated downstream of the present apparatus 1, such as a station for erecting and subsequent filling of tubular blanks, require a constant alignment of the blanks (for example with respect to the second reference plane Z) when their size changes.

Figure 2 shows a tubular blank (minimum size), indicated with broken line, whose dimensions are smaller of the blank indicated with continuous line (maximum size), and the position assumed by the first wall 30, by the lateral walls 32, 33, by the sensor means 8 and the first and second movable hold up means 5, 6, due to the size change.

It is specified that in some types of piled up articles, of given shape, dimensions and material, the plate 61 can be already aligned, at every new cycle, with the opposite portion of the contact surfaces W.

Therefore, the latter is immediately detected by the sensor means 8, without the need for any lowering/lifting of the pile 2 by the first movable hold up means 5: thus, the sensor means 8 could not be necessary and only an initial adjustment of the position assumed by the support elements 50, in holding position A, could be sufficient.

On the other side, the present invention does not exclude a similar possibility, although according to the above described first embodiment; the sensor means 8 are used and it is possible to adjust and/or control automatically the height assumed with each cycle by the second arm 53 of each support element 50, when the latter is in the holding position A.

Actually, with the above mentioned types of articles, the above adjustment (automatic as it has been said) occurs only in few cases, such as for example size change or starting up of the apparatus.

For this purpose, the height the second arm 53 must assume is adjusted so that the contact surfaces W are always aligned with the translation plane J.

In general words, in any case, the results show that the apparatus 1 performs the above adjustment sporadically during the production, therefore the so obtained reliability is accompanied by a considerable increase of the production rate (the number of operations performed in one cycle is reduced, just because the adjustment is not systematic).

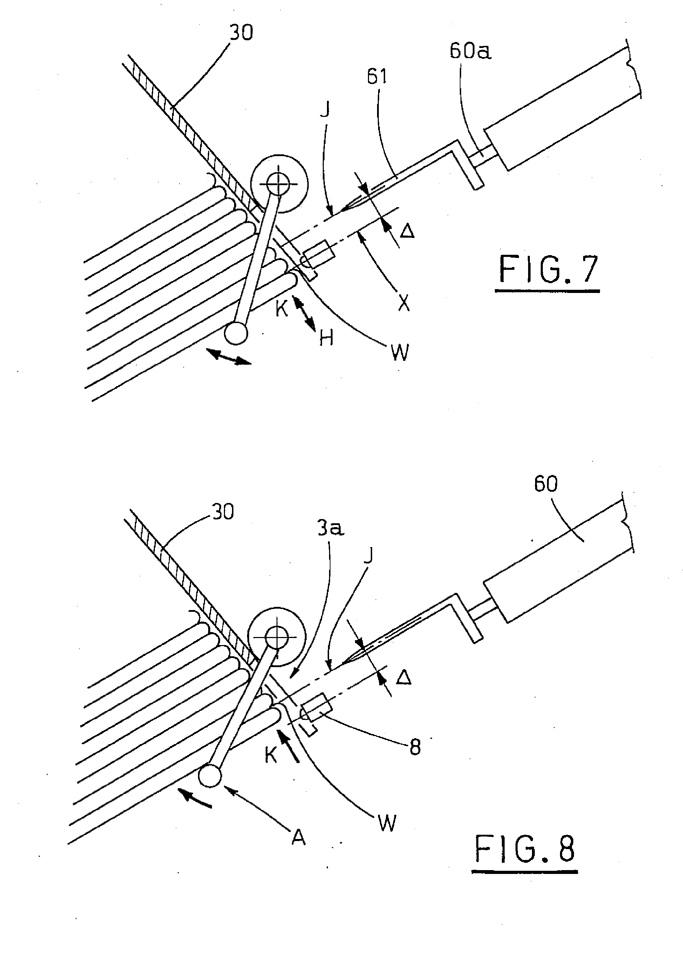

The just made considerations refer to a first embodiment of the proposed apparatus, according to Figures 1, 2, 3, 4, 5, 6, while an alternative, described later on, is shown in Figures 7, 8.

In this case, the sensor means 8 are situated below the plate 61, so that the direction X verified by them is parallel to the translation plane J and distant therefrom by a prefixed quantity Δ; in particular, the direction X verified by the sensor means 8 is situated on the vertical plane, containing the medium axis J1 of the plate 61 (see also Figure 2: position Y2 assumed by the sensor means 8).

According to this variant, the detection of the contact surfaces W by the sensor means 8 (see the previous description) is followed by the operation of the first movable hold up means 5, in holding position A, to determine lifting of the pile 2 (direction K in Figure 8) by the quantity Δ, until alignment of the plate 61 with the opposite portion of the contact surfaces W occurs and consequently the plate 61 is introduced between the lowermost article 2* and the above article 20*, according to what has been illustrated above.

The placing of the sensor means 8 below the plate 61, differently from the beside position of the first embodiment, advantageously assures perfect introduction of the plate 61 between the lowermost article 2* and the above article 20*, if the crosswise extension of the contact surfaces W (opposite to the sensor means 8) is not perfectly straight.

Actually, in this way, the portion detected by the sensor means 8 is the same where the pointed portion 61A of the plate 61 will be introduced.

This embodiment features all the advantageous technical-functional aspects of the first embodiment, discussed above.

Finally, with reference to the above description, it is specified that the release of the lowermost article 2* along a trajectory including a circumference arc C, with the center in on the support means 4, can be guided by third support means, not shown, and not caused by gravity.

Moreover, the support means 4 can be formed in other way at the lower end of the second wall 31, substantially coplanar with the upper active run 9a of the conveying belt 9, with consequent creeping of the article on the run 9a when the belt is operate, or being only parallel to the upper active run 9a, thus avoiding any creeping.

Otherwise, instead of only one conveying belt 9, there can be a first conveying belt, operated intermittently, and a second conveying belt, connected downstream, operated continuously.

In this case, the support means 4 coincide with relative portions of the upper run of the first belt, close to the lower end of the second wall 31, and the first belt is operated only after the lowermost article has been released on both conveying belts as in the previous case.

According to another possibility, there is a stationary support forming the support means 4, instead of the first conveyor.

During the release of the lowermost article on the above stationary support and on the second conveyor, the latter, operated continuously as already said, transfers the article, touching it with the entire surface of its upper run, to subsequent stations.

Also in this case, creeping is avoided.

It results obvious from the above description that the apparatus 1 for withdrawing flat folded, piled up articles from the open bottom 3a of the magazine 3 performs as follows:
- operating of the first movable hold up means 5, holding the lowermost article 2* of the pile 2 of flat folded articles, together with the support means 4, to lower/lift the pile 2, until the contact surfaces W between the lowermost article 2* of the pile and the above article 20* are detected by the sensor means 8;
- introducing of the plate 61, operated by the second actuator means 60, between the lowermost article 2* and the above article 20*;
- operating of the first movable hold up means 5 to disengage from the lowermost article 2* which is consequently released onto the conveying belt 9, situated below, and holding of the above article 20*, now lowermost, by the support means 4 and the second movable hold up means 6;
- operation of the first movable hold up means 5 to support the above article 20*, now lowermost, together with the second movable hold up means 6 and the support means 4;
- removing of the second movable hold up means 6, to disengage therefrom the above article 20*, now lowermost, being held by the first movable hold up means 5 and the support means 4.

With reference to the description of the present apparatus 1, it has been specified that the proposed method can omit the first step, in which the pile 2 is lowered/lifted, until the contact surfaces W is detected by the sensor means 8, because in some cases an initial adjustment of the position assumed by the first movable hold up means 5 allows, at the beginning of each cycle, an already optimal alignment between the contact surfaces W and the translation plane J of the plate 61.

On the other side, a systematic control of this alignment makes the apparatus 1, carrying out the method, more reliable and productive, and assures a working continuity even at for example starting up, and at the size change.

The present method can include, after the detection of the portion of the contact surfaces W by the sensor means 8, the operation of the first movable hold up means 5 to lift locally the pile 2 (see Figures 7, 8), with respect to the magazine 3 by prefixed quantity Δ, so as to align the plate 61 with the corresponding portion of the contact surfaces W to allow the plate 61 introduction.

The lowermost article 2* is released onto the upper active run 9a of the conveying belt 9 situated below due to gravity, along a trajectory including a circumference arc C, which has its center in correspondence to the support means 4; otherwise, as it has already been pointed out, the release onto the belt 9 below can be guided by third support means.

It results clear from what has been just said that the proposed method for withdrawing flat folded, piled up articles from the open bottom 3a of a magazine 3 assures a release of a prefixed number of articles, in particular singular, from the magazine 3.

The work steps characterizing the proposed method are extremely simple and intuitive, allowing high productivity and flexibility standards in any working conditions, independently from the size and type of the articles, as well as from their constituent material.

The apparatus, which carries out the method, as it results from the description, is very reliable and can work continuously with high productivity.

Actually, the apparatus can adapt automatically and immediately to the size changes, as well as work correctly with any type of flat folded article, piled up in the magazine 3, even if the contact surfaces between the lowermost article 2* and the above article 20* is not straight.

Moreover, the apparatus ensures a release, at each working cycle, of a prefixed number of articles, multiple or single, in relation to the use needs, because the adjustment of the height that the second arm 53 of the support elements 50 in the holding position A must assume, allows to establish the number of articles to release each time.

Another particularly advantageous aspect of the invention lies in fact that the tubular blanks released by the magazine onto the conveyor 9, independently from their size, have the first transversal pre-creasing line 22a aligned with respect to a precise stationary reference plane (second stationary reference plane Z): it can be extremely advantageous for the devices, which are situated downstream and require such alignment for their good working.

This advantageous aspect extends also to other articles, not tubular blanks, because it is possible to define any fixed reference plane.

## Claims

1. Method for withdrawing flat folded, piled up articles from the open bottom of a magazine, the articles resting on support means and on first hold up means situated at the bottom of the magazine, **characterized by**:
• providing said first hold up means in form of movable hold up means;
• introducing second movable hold up means (6) between the lowermost article (2*) of said pile (2) and an above article (20*) situated just above the lowermost article, so that said second movable hold up means support said above article (20;
• operating said first movable hold up means (5) to disengage from the lowermost article (2*), with consequent release of the lowermost article (2*) onto conveying means (9) situated below;
• operating said first movable hold up means (5) to support said above article (20*), now lowermost, together with the second movable hold up means (6) and the support means (4) ;
• removing the second movable hold up means (6) to let the above article (20*), now lowermost, held by the first movable hold up means (5) and the support means (4).

2. Method according to claim 1, **characterized in that**, before introduction of the second movable hold up means (6) between the lowermost article (2*) of said pile (2) and an above article (20*), the first movable hold up means (5) are operated to lower or lift the pile (2) of flat folded articles, until the contact surfaces (W) between the lowermost article (2*) of the pile and the above article (20*) are detected by sensor means (8) situated near the open bottom (3a) of said magazine (3).

3. Method, according to claim 2, **characterized in that** said sensor means (8) are located below or above said second movable hold up means at a predetermined distance (Δ) and the first movable hold up means (5) are operated again, after detection of the contact surfaces (W) by said sensor means (8), to lower/lift the pile (2) of articles by said predetermined distance (Δ), so as to place precisely the contact surfaces (W) in a translation plane (J) of said second movable hold up means (6).

4. Method, according to one of the claims from 1 to 3, **characterized in that** said lowermost article (2*) is released, guided by third support means onto the conveying means (9) .

5. Method, according to one of the claims from 1 to 4, **characterized in that** said flat folded articles are tubular blanks in flat folded configuration.

6. Apparatus for withdrawing flat folded, piled up articles from the open bottom of a magazine, **characterized in that** it includes:
support means (4), situated below the open bottom (3a) of said magazine (3) and holding the lowermost article (2*) of the pile (2) at one side;
first movable hold up means (5), situated below the open bottom (3a) of said magazine (3), for supporting the lowermost article (2*) of the pile (2) on the side opposite with respect to the support means (4), said first movable hold up means (5) moving between a holding position (A) and
a release position (B) of said lowermost article (2*);
second movable hold up means (6), situated near the open bottom (3a) of said magazine (3), on the same side as said first movable hold up means (5), and operated to insert between said lowermost article (2*) of said pile (2) and an above article (20*) situated just above the lowermost article, to hold up the above article while said first movable hold up means (5) are moved from the holding position (A) to the release position (B) to release the lowermost article (2*), and removed from the pile of articles after said first movable hold up means (5) having been returned to the holding position (A) to let the above article (20*), now lowermost, held by the first movable hold up means (5) and the support means (4).

7. Apparatus, according to claim 6, **characterized in that** said first movable hold up means (5) in the holding position
(A) are operated to slightly lower or lift said pile (2) of articles, with sensor means (8) being situated near said open bottom (3a) of said magazine (3), on the same side as the first movable hold up means (5), for detecting said contact surfaces (W) between said lowermost article (2*) of said pile (2) and an above article (20*) situated just above the lowermost article, and consequently for stopping said first movable hold up means (5) in a position to place the contact surfaces in a translation plane (J) for insertion of the second movable hold up means (6).

8. Apparatus, according to claim 6 or 7, **characterized in that** said first movable hold up means (5) include a pair of support elements (50), situated at both sides of a first wall (30) of said magazine (3), and are operated, into rotation by first actuator means 51 about a substantially horizontal axis.

9. Apparatus, according to claim 8, **characterized in that** each support element (50) includes a first arm (52), extending sidewise of the magazine, connected at one end to the an actuator (51) and at another end to a second arm (53) disposed orthogonal to the magazine and extending therebelow.

10. Apparatus, according to claim 9, **characterized in that** said second arm (53) is carried by said first arm (52) rotatably.

11. Apparatus, according to claims 6 to 10, **characterized in that** said second movable hold up means (6), operated by second actuator means, include a plate (61), moved to enter between, or exit from said contact surfaces (W), along a translation plane (J).

12. Apparatus, according to claims 7 to 10, **characterized in that** said sensor means (8)are placed coplanar with the translation plane (J), beside said second movable hold up means (6), so that said pile of articles is lifted or lowered until alignment of said contact surfaces (W) with said second movable hold up means (6).

13. Apparatus, according to claims 7 to 10, **characterized in that** said sensor means (8)are placed right below or above said second movable hold up means (6) at a predetermined distance (Δ), so that said pile of articles is lifted or lowered until detection by said sensor means of said contact surfaces (W), and then lifted or lowered again by said predetermined distance (Δ) to set said contact surfaces (W) in alignment with said second movable hold up means (6).

14. Apparatus, according to claims 7 to 13, **characterized in that** said first movable hold up means (5), said second movable hold up means (6) and the sensor means (8) can translate towards and away from said second wall (31) of the magazine (3), in relation to the size of flat folded articles contained therein.

15. Apparatus, according to claim 14, **characterized in that** said first movable hold up means (5), said second movable hold up means (6) and the sensor means (8) are mounted on a common support frame, which can translate with respect to said second wall (31).

16. Apparatus according to claim 15, **characterized in that** said common frame is moved along with the first wall (30).

17. Apparatus, according to claims 6 to 16, **characterized in that** said support means (4) include an upper active run (9a) of a conveying means (9) situated below said magazine.

18. Apparatus, according to claims 6 to 16, **characterized in that** said support means (4) include a first conveying belt situated below said magazine and operated intermittently when said lowermost article (2*) is released, and a second conveying belt, disposed downstream of the first conveying means and operated continuously.

19. Apparatus, according to claims 6 to 16, **characterized in that** said support means (4) include abutment means situated substantially coplanar with an upper active run (9a) of a conveying means (9) situated below said magazine.

20. Apparatus, according to claims 6 to 16, **characterized in that** said support means (4) include abutment means situated slightly above an upper active run (9a) of a conveying means (9) situated below said magazine, said abutment means being removed when said first hold up means are moved to the release position (B) to release the lowermost article.

21. Apparatus, according to claims 6 to 20, **characterized in that** at least the first wall (30) and the second wall (31) of said magazine are inclined, with respect to a line joining the resting points of said support means and first hold up means, towards the side corresponding to the support means 4, by an angle of less than 90°.

22. Apparatus, according to claims 6 to 21, **characterized in that** said lowermost article (2*) is released onto said conveying means (9) assisted by third support means.
